# EUROPEAN PATENT APPLICATION

(11) **EP 2 916 090 A1**
(43) Date of publication of application: **09.09.2015**
(21) Application number: 15153735.4
(22) Date of filing: 04.02.2015
(51) Int. Cl.: F26B 5/06, A23L 2/14, A23L 3/44

(54) **Flowable lyophilisate**

(30) Priority: 04.02.2014 LU 92369
(71) Applicant: Project Pharmaceutics GmbH, 82152 Martinsried (DE)
(72) Inventor: Schuetz, Andreas, 82152 Martinsried (DE); Hellerbrand, Klaus, 82152 Martinsried (DE)
(74) Representative: Schiweck, Weinzierl & Koch

(57) **Abstract**

The present invention is directed to a lyophilization method that allows the production of flowable lyophilisates without the need of a distinct mechanical disintegration step after drying. The present invention is further directed to lyophilisates obtainable according to the method of the invention.

## Description

### FIELD OF THE INVENTION

The present invention relates to a method for lyophilizing compositions. More precisely the present invention provides a method to directly obtain a flowable lyophilisate without the need of a mechanical disintegration of e.g. a "lyo-cake". The present invention further relates to lyophilisates obtainable according to the method of the invention.

### BACKGROUND OF THE INVENTION

Lyophilization, also known as freeze-drying, is a process in which water and/or other solvents are removed from a product after it is frozen and placed under a vacuum, allowing the frozen solvent(s) to change directly from the solid to the gaseous state without passing through a liquid state.

Lyophilization is used to dry and preserve various products such as food, pharmaceuticals, diagnostics, blood fractions, microorganisms or proteins. Since lyophilization greatly reduces weight, it makes products more convenient for storage, processing and transport. Moreover removing water suppresses biological growth and chemical reactions and therefore increases the shelf-life of products.

Compared to other drying techniques lyophilization has several advantages. Since the product is not exposed to high temperatures, lyophilization is particularly suitable for thermolabile substances. Furthermore lyophilization can be used for drying a product (e.g. food) while maintaining its basic shape. Another positive aspect is that freeze-dried products can be rapidly rehydrated due to their porous structure and large specific surface.

Common lyophilization methods are based on the removal of solvent(s) by sublimation and desorption and usually comprise the following three steps:
(1) Freezing (crystallization of solvent(s) at atmospheric pressure)
(2) Primary drying (sublimation of crystallized solvent(s) under a vacuum)
(3) Secondary drying (desorption of non-crystallized solvent residues)

Usually, freezing is carried out at normal pressure and aims to cool the composition until it is completely frozen, such that as much water as possible of (and/or other solvents) has passed from the liquid into the solid state. As freezing progresses, the solute phase becomes highly concentrated and is termed the "freeze concentrate." By the end of freezing, the freeze concentrate usually contains only about 20% of water (w/w), or less than 1% of total water in the solution before ice formation.

Primary drying, or ice sublimation, begins whenever the chamber pressure is reduced and the shelf temperature is raised to supply the heat removed by ice sublimation. During primary drying, the chamber pressure is well below the vapor pressure of ice, and ice is transferred from the product to the condenser by sublimation and crystallization onto the cold coils/plates in the condenser. Secondary drying is the stage where water is desorbed from the freeze concentrate, usually at elevated temperature and low pressure.

Water is the most commonly used solvent. Beside water also other solvents or solvent mixtures with water are used for lyophilization as long as those solvents or solvent mixtures can be frozen or freeze dried under technically feasible conditions.

Under appropriate conditions lyophilization removes solvents, while leaving the basic structure of a material intact. Lyophilization products therefore typically emerge as coherent entities having a spongy porous structure. The solid content remaining after the freeze drying process is usually called 'cake'.

Lyophilization of liquid or semisolid compositions can be carried out in the final packaging container or as bulk lyophilization. In the latter a large sample of a product is lyophilized in one tray and subsequently filled into packaging containers. To allow a transfer of the freeze-dried composition into containers the bulk cake is usually disintegrated into a powder. Disintegration steps, like e.g. milling, are however time-consuming, increase production costs and are difficult to carry out under aseptic conditions. Due to this there is a need to improve the manufacturing of products, which are to be filled into containers after lyophilization.

### SUMMARY OF THE INVENTION

The present invention meets such needs and provides a lyophilization method to obtain a flowable powdery lyophilisate without the need of a disintegration step. By use of the present invention it is e.g. possible to lyophilize pharmaceutical compositions as bulk and fill the freeze-dried product directly into containers. Thereby, the present invention provides faster and less expensive means and methods to obtain lyopohilisates, which are, in addition, more practicable under aseptic conditions than methods known in the prior art.

The present inventors have surprisingly found that lyophilization of partially frozen compositions comprising a particular mixture of water and an organic solvent leads to a lyophilisate in form of a flowable powder instead of a cake.

Thereby the present inventors succeeded in developing a lyophilization method with which it is, to the best of the inventors' knowledge for the first time, possible to produce a flowable lyophilisate in a normal freeze-dryer without the need of a disintegration step.

In a first aspect the present invention provides a method for the preparation of a flowable powdery lyophilized composition, comprising
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a flowable powdery lyophilized composition.

The present invention preferably relates to the lyophilization of liquid or semisolid compositions like e.g. solutions, emulsions and suspensions.

In the method of the invention, the composition preferably has a glass transition temperature which is above the temperature chosen for freezing. The glass transition temperature of the composition is preferably determined by differential scanning calorimetry (DSC), differential thermal analysis, electrical resistance or freeze drying/cryo-microscopy.

The present invention further provides a method for the preparation of a flowable powdery lyophilized composition, wherein the flowable powdery lyophilized composition is preferably obtained without the need of a distinct mechanical disintegration step after drying.

In the method of the invention the organic solvent is preferably miscible with water such that essentially no phase separation occurs.

In the method of the invention the binary solvent mixture preferably does not fully freeze at a temperature of -40°C under normal pressure, whereby a binary mixture of 10% v/v tert-butylalcohol and 90% water v/v serves as reference that fully freezes at said temperature and normal pressure.

In some embodiments the organic solvent used in the method of the invention is present in the binary mixture at 5-15% v/v, preferably at about 10% v/v.

In some embodiments the organic solvent used in the method of the invention is ethanol, solketal (2,2-Dimethyl-1,3-dioxolan-4-yl)methanol), methanol, 1-propanol, 2-propanol, 1-butanol, 2-butanol, pentanol (all iso forms), DMSO, N-methyl-2-pyrrolidon, acetone, methylethylketone, ethylacetate, isobutylacetate, isopropylacetate, methylacetat, 3-methyl-1-butanol, propylacetate, ethylether, tert-butylmethylether or a mixture thereof. In some embodiments the bulking agent used in the method of the invention is trehalose, sucrose, lactose, raffinose, mannitol, glycine, biogenic amino acids (e.g. alanine, arginine), sodium chloride, dextran, hydroxyethyl starch, or PVP.

In some embodiments of the invention, the organic solvent is ethanol and the bulking agent is mannitol. In some embodiments of the invention, the organic solvent is solketal and the bulking agent is mannitol. In some embodiments of the invention, the organic solvent is 2-propanol and the bulking agent is trehalose.

In the method of the invention primary drying preferably occurs at a shelf temperature above the temperature chosen for the freezing and at reduced pressure. Preferably primary drying occurs at a temperature above the lowest temperature achieved during the freezing step.

In some embodiments of the invention a so called ice annealing step or thermal treatment is applied. Therefore, the composition is kept at a temperature slightly below the melting temperature of the composition for several hours before bringing the composition down to the temperature chosen for freezing.

In some embodiments of the invention the secondary drying occurs at the same temperature as the primary drying.

In some embodiments of the invention, the method is carried out in a tray.

In some embodiments of the present invention the composition, which comprises at least one compound of interest and a bulking agent dissolved in a binary mixture of water and an organic solvent, comprises at least one further pharmaceutical excipient.

In another aspect, the present invention is directed to a lyophilized composition obtainable with any of the methods of the invention as disclosed herein.

Hence, one aspect of the invention is a lyophilized composition obtainable by
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a lyophilized composition.

An aspect of the present invention is a flowable powdery lyophilized composition obtainable by any of the methods of the invention.

Thus, another aspect of the invention is a flowable powdery lyophilized composition obtainable by
(a) subjecting a composition comprising at least one compound of interest and a bulking agent in a binary mixture of water and an organic solvent to freezing,
   wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a flowable powdery lyophilized composition.

A further aspect of the present invention is a lyophilized composition obtainable by any of the methods of the invention, wherein said composition contains a residual amount of an organic solvent. Preferably said organic solvent is ethanol, solketal (2,2-Dimethyl-1,3-dioxolan-4-yl)methanol), methanol, 1-propanol, 2-propanol, 1-butanol, 2-butanol, pentanol (all iso forms), DMSO, N-methyl-2-pyrrolidon, acetone, methylethylketone, ethylacetate, isobutylacetate, isopropylacetate, methylacetat, 3-methyl-1-butanol, propylacetate, ethylether, or tert-butylmethylether, or a mixture thereof. Preferably said composition is a flowable powdery lyophilized composition.

Thus, an aspect of the present invention is a lyophilized composition obtainable by any of the methods of the invention that contains a residual amount of ethanol, solketal (2,2-Dimethyl-1,3-dioxolan-4-yl)methanol), methanol, 1-propanol, 2-propanol, 1-butanol, 2-butanol, pentanol (all iso forms), DMSO, N-methyl-2-pyrrolidon, acetone, methylethylketone, ethylacetate, isobutylacetate, isopropylacetate, methylacetat, 3-methyl-1-butanol, propylacetate, ethylether, or tert-butylmethylether, or a mixture thereof.

Another aspect of the present invention is a flowable powdery lyophilized composition that contains a residual amount of an organic solvent, preferably ethanol, solketal (2,2-Dimethyl-1,3-dioxolan-4-yl)methanol), methanol, 1-propanol, 2-propanol, 1-butanol, 2-butanol, pentanol (all iso forms), DMSO, N-methyl-2-pyrrolidon, acetone, methylethylketone, ethylacetate, isobutylacetate, isopropylacetate, methylacetat, 3-methyl-1-butanol, propylacetate, ethylether, or tert-butylmethylether, or a mixture thereof.

The present invention further relates to the use of a method for the preparation of a flowable powdery lyophilized composition, comprising
(a) subjecting a composition comprising at least one compound of interest and a bulking agent in a binary mixture of water and an organic solvent to freezing,
   wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a lyophilized composition.

### BRIEF DESCRIPTION OF THE DRAWINGS

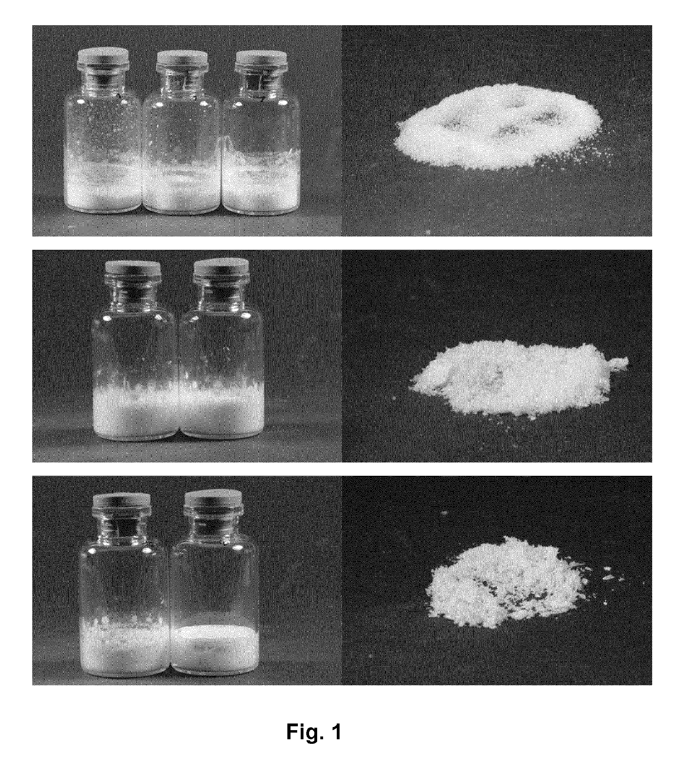

Fig. 1 shows a flowable lyophilisates obtained by the methods described herein. Lyophilization of compositions comprising ethanol/mannitol (A), 2-propanol/mannitol (B) and 2-propanol/trehalose (C) resulted in the formation of a flowable powdery lyophilisate as described herein.

### DETAILED DESCRIPTION OF THE INVENTION

The present invention refers to a method for lyophilizing liquid or semisolid compositions comprising water and an organic solvent.

The most commonly used solvent for lyophilization is water. In addition to that other solvents (e.g. organic solvents) are often used as co-solvents. Organic solvents are used for example as wetting agent, to reduce the degradation rate of active compounds in water or to enhance the solubility of certain active compounds poorly soluble in water. However, a lot of organic solvents do not freeze under technically feasible conditions and remain as liquid residues within the frozen matrix. Among those are methanol, ethanol, n-propanol, n-butanol, acetonitrile, methylethylkentone, dichlormethane and methylisobutyl (Teagarden DL et al. Practical aspects of lyophilization using non-aqueous co-solvent systems. European Journal of Pharmaceutical Science. 2002 Mar;15(2):115-33). Solvent systems containing organic solvents of these types were in the prior art usually not considered feasible for freeze drying. Ethanol, for example, is considered as less preferred co-solvent in a mixture with water, as a shelf temperature of about -120°C is required to attain frozen state, thus requiring a tremendous rise in energy consumption (Baheti A. et al: Excipients used in lyophilization of small molecules. J Journal of Excipients and Food Chemicals; 1: 41-54, 2010).

Another problem of lyophilizing compositions comprising water and an organic solvent is their inhomogeneous freezing behavior. During freezing ice columns (frozen water) grow and touch the solution surface. As the temperature of the composition falls, columns of eutectic ice (frozen organic solvent and solids) follow and dissolved solids concentrate as a liquid layer at the solution surface. In systems containing organic co-solvents which do freeze (e.g. tert-butanol), the liquid layer solidifies and forms a eutectic skin which completely covers the product surface. However, in systems containing organic co-solvents which do not completely freeze (e.g. methanol, ethanol, n-propanol) the liquid layer does not exceed the saturation concentration and remains as liquid film at the product surface (Seager et al., Structure of Products Prepared by Freeze-Drying Solutions Containing Organic Solvents. PDA Journal of Pharmaceutical Science and Technology. 1985 Jul-Aug;39(4):161-79.). Organic co-solvents which do not freeze or only partially freeze during lyophilization are therefore in the prior art known to dry poorly and promote cake collapse (Teagarden DL et al. Practical aspects of lyophilization using non-aqueous co-solvent systems. European Journal of Pharmaceutical Science. 2002 Mar;15(2):115-33).

As explained above, common lyophilization methods aim to completely freeze compositions prior to drying. Moreover solvent systems comprising water and an organic solvent, which does not completely freeze are known in the prior art to be difficult to use and often result in an unacceptable freeze-dried product (Teagarden DL et al. Practical aspects of lyophilization using non-aqueous co-solvent systems. European Journal of Pharmaceutical Science. 2002 Mar; 15(2): 115-33). Thus, solvent systems which do not completely freeze in normal freezedryers are usually considered to be unfavorable.

In contrast to that, the present inventors have however surprisingly found that it is possible to lyophilize not completely frozen compositions and obtain an acceptable freeze-dried product. More precisely, the present inventors revealed that the lyophilization of partially frozen composition comprising water and an organic solvent results, under particular conditions, in a flowable powdery lyophilisate.

The present inventors have developed a lyophilization method that is based on just partially freezing the composition to be lyophilized and removing the solvents by vaporization and sublimation and subsequently by desorption.

The method of the present invention thereby differs from common lyophilization methods. First, the method of the present invention aims to not completely freeze the composition to be lyophilized. Second, the method of the present invention aims to remove the unfrozen organic solvent by vaporization, a process which does normally not occur during lyophilization.

As mentioned above lyophilization of partially frozen compositions comprising water and an organic solvent has already been tested but was considered to be disadvantageous in the prior art (Seager et al., Structure of Products Prepared by Freeze-Drying Solutions Containing Organic Solvents. PDA Journal of Pharmaceutical Science and Technology. 1985 Jul-Aug;39(4):161-79.)

In one aspect, the present invention provides a method for the preparation of a flowable powdery lyophilized composition comprising the following steps:
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a flowable powdery lyophilized composition.

### To step (a) - freezing:

Within the present invention, the freezing step (a) aims that the majority of water crystallizes while the organic solvent remains liquid. In the resulting partially frozen compositions ice crystals and solid components are dispersed in a continuous phase comprising the organic solvent. The present invention indicates that under appropriate lyophilization conditions the continuous phase is removed by vaporization and the dis-continuous solid phase (ice crystals) by sublimation, leading to a non-coherent powdery lyophilizate.

The freezing step is performed at a shelf temperature that allows obtaining a partially frozen composition. In the methods of the invention, the freezing in step (a) is conducted at a shelf temperature set above the eutectic temperature of the used binary mixture of water and organic solvent. It is envisaged that the organic solvent does not lower the phase transition temperature of the composition to be lyophilized comprising the compound of interest, the bulking agent and the solvent (e.g. water).

The freezing step (a) is conducted at a temperature and for the time necessary to obtain a partially frozen composition. "Partially frozen" thereby refers to a state in which the majority of water is frozen and the organic solvent liquid. The freezing of step (a) is conducted at any suitable pressure to obtain a partially frozen composition. Preferably, freezing step (a) is conducted at atmospheric pressure.

The freezing step (a) of the present method leads to the crystallization of solvent (e.g., water) while the organic solvent remains liquid. The freezing step (a) is preferably performed at a shelf temperature at which the majority of solvent (e.g., water) molecules crystallize. However it is not excluded that after freezing solvent (e.g., water) molecules remain in the liquid phase and/or are adsorbed to the frozen components.

Preferably, the temperature chosen for freezing is lower than the glass transition temperature of the composition to be lyophilized. The glass transition temperature of said composition can be determined by, e.g., differential scanning calorimetry (DSC), differential thermal analysis, electrical resistance or freeze drying/cryo-microscopy.

### To step (b) - primary drying:

The primary drying step (b) is performed to remove the solvents which are either in the liquid phase or in the solid phase. The liquid phase includes the unfrozen organic solvent and the solid phase includes the solidified solvent (e.g., water). It is however not excluded that a residual amount of solvent (e.g., water) is not in the solid phase, but e.g. adsorbed to the solid compound. The primary drying step is performed at a shelf temperature and pressure that allows the vaporization of the liquid phase and the sublimation of the solid phase.

The primary drying step (b) is preferably performed at a shelf temperature above the shelf temperature chosen for the freezing step (a) and at reduced atmospheric pressure. The primary drying step (b) is performed at a shelf temperature and pressure allowing vaporization of the liquid phase (comprising the organic solvent). The pressure of the primary drying step (b) is preferably set to a value which is lower than the corresponding glass transition respectively collapse temperature of the composition according to the vapor pressure / temperature equilibrium.

The primary drying is preferably conducted for a time sufficient to ensure that the liquid organic solvent as well as the solid (frozen) solvent (e.g. water) is substantially removed from the composition. One skilled in the art understands that the time required for primary drying varies in dependence of different parameters. The duration of the primary drying may depend on the fill volume, concentration of excipients, etc.

The primary drying can be monitored by a number of methods. For instance, it may be monitored by measuring changes in the product temperature. Other methods to monitor the primary drying include comparing the capacitance pressure signal to the inductive pressure signal and monitoring of the composition of the vapor phase within the lyo-chamber by e.g. mass spectrometry.

### To step (c) - secondary drying:

The secondary drying step (c) is performed to remove 'unfrozen' solvent molecules adsorbed to the solid compounds by desorption. This step is equivalent to the secondary drying of traditional lyophilization methods.

Secondary drying is preferably conducted for a time sufficient to ensure that adsorbed water is removed from the concentrate remaining after primary drying to a desired extend. One skilled in the art understands that the time required for secondary drying varies in dependence of different parameters. The duration may depend on the fill volume, concentration of excipients, surface area of the dried product etc.

### To step (d) - obtaining:

Step (d) refers to directly obtaining a flowable powdery lyophilized composition. "Directly obtaining" means herein that the lyophilizate does not necessarily need to be disintegrated to be rendered flowable. Preferably the lyophilisate obtained by use of the present invention does not emerge during drying in form of a cake, but as a loose heap of single particles, such as powders or granules. Hence a distinct mechanical disintegration step like milling, shearing, shaking, pounding, or pulverizing is not necessary to render the lyophilizate flowable.

Within the present invention, the preparation of a flowable powdery lyophilized composition is based on the use of a solvent mixture comprising water and an organic solvent. Said solvent mixture is preferably a binary mixture of water and an organic solvent. However it is not excluded that the composition to be lyophilized comprises further liquids, such as liquid compounds of interest or liquid pharmaceutical excipients, e.g. further organic co-solvents.

Within the present invention the concentration of organic solvent in the binary mixture is 5 % v/v, 6 % v/v, 7 % v/v, 8 % v/v, 9 % v/v, 10 % v/v, 11 % v/v, 12 % v/v, 13 % v/v, 14 % v/v or 15 % v/v. Preferably the concentration of organic solvent in the binary mixture is 7 % v/v, 8 % v/v, 9 % v/v, 10 % v/v, 11 % v/v, 12 % v/v or 13 % v/v. Said concentrations include variations of 0,5 % v/v above or below the specified value.

To determine whether a binary mixture of water and an organic solvent satisfies the prerequisites for use in the present invention one could test the mixture. A binary mixture which satisfies the prerequisites for use in the present invention does preferably not fully freeze at a temperature of -40°C under normal pressure, whereby a binary mixture of 10% v/v tert-butylalcohol and 90% water v/v serves as reference that fully freezes at said temperature and normal pressure. A composition is herein considered to be fully frozen if it is a solid contiguous frozen block. It is not excluded that residual amounts of solvents are liquid within such a contiguous frozen block.

Preferred organic solvents of the present invention include ethanol, solketal (2,2-Dimethyl-1,3-dioxolan-4-yl)methanol), methanol, 1-propanol, 2-propanol, 1-butanol, 2-butanol, pentanol (all iso forms), DMSO, N-methyl-2-pyrrolidon, acetone, methylethylketone, ethylacetate, isobutylacetate, isopropylacetate, methylacetat, 3-methyl-1-butanol, propylacetate, ethylether, tert-butylmethylether, or a mixture thereof.

Preferably the organic solvents of the present invention belong to USP class 3 or class 2 residual solvents.

Compositions which are subjected to the method of the present invention comprise a binary mixture of water and an organic solvent, at least one compound of interest and at least one bulking agent. Optionally, said compositions comprise one or more further ingredients, like e.g. further pharmaceutical excipients.

"Bulking agents", as the name implies, form the bulk of a lyophilized composition and provide an adequate structure of the product. In general, bulking agents are used to increase the bulk of low dose drugs (or other compounds of interest).

Bulking agents used within the present invention include but are not limited to trehalose, sucrose, lactose, raffinose, mannitol, glycine, biogenic amino acids (e.g. alanine, arginine), sodium chloride, dextran, hydroxyethyl starch, and PVP.

Within the method of the present invention said bulking agents may appear as a crystalline and/or amorphous solid at the end of the lyophilization process. It cannot be excluded, that the bulking agent may crystallize in different polymorphic forms during lyophilization.

A composition subjected to the method of the invention preferentially contains less than 20% bulking agent, less than 15% bulking agent, or less than 10% bulking agent. Preferably the bulking agent has a concentration within the composition of 5% v/v.

Within the present invention "compound of interest" includes any substance (or mixture of substances) which is suitable to be transferred into a freeze-dried state. Compounds of interest include, but are not limited to active pharmaceutical ingredients like proteins, peptides, virus, nucleic acids, antibodies, small molecules. A compound of interest can be solid, liquid or semisolid. Furthermore a compound of interest may be contained in liposomes, or be in the form of nanoparticles or be otherwise processed.

"Small molecule" describes any compound of interest, e.g. a pharmaceutically active ingredient, which is not a protein, a peptide, nucleic acids or viruses and has a molecular weight of less than 1200 Da (Dalton), less than 1000 Da, less than 800 Da or less than

600 Da, preferably less than 800 Da.

In some embodiments of the present invention the composition to be lyophilized comprises additional pharmaceutical excipients.

Such pharmaceutical excipients include, but are not limited to the following:
i. Bulking agent
ii. Buffering agent
iii. pH adjusting agent
iv. Complexing agent
v. Surfactant
vi. Co-solvents
vii. Tonicifying agent
viii. Antimicrobial agent

Pharmaceutical excipients used in lyophilization are known in the art and e.g. described in Baheti A. et al: Excipients used in lyophilization of small molecules. J Journal of Excipients and Food Chemicals; 1: 41-54, 2010.

"Pharmaceutical excipient" as used herein refers to any component other than the component of interest. "Pharmaceutical excipient" as used herein include, but are not limited to, common pharmaceutical excipients like those e.g. described in "Remington's Pharmaceutical Sciences" by E.W. Martin or in "Handbook of Pharmaceutical Excipients" by R. C. Rowe et al.. Within the present invention "pharmaceutical excipient" describes any component other than the component of interest irrespectively of whether the obtained lyophilisate is a pharmaceutical composition or not.

Within the present invention ingredients of the composition to be lyophilized (e.g. compound of interest, bulking agent, pharmaceutical excipients) can be dissolved, diluted, suspended or dispersed in the binary mixture of water and an organic solvent. Hence compositions subjected to the method of the invention include solutions, emulsions and suspensions.

In another aspect, the present invention is directed to a lyophilized product obtainable with any of the method of the invention as disclosed herein.

Hence, one aspect of the invention is a lyophilized composition obtainable by
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a lyophilized composition.

Another aspect of the invention is a flowable powdery lyophilized composition obtainable by
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a flowable powdery lyophilized composition.

As used herein "flowable" relates to pharmaceutical flowability and the ability of discrete solid particles (for example powders or granules) to trickle through a funnel. In particular "flowable" describes herein the ability of lyophilisates to flow (move vertically in or as if in a stream) out of the freeze dryer and e.g. into a container. Accordingly, a flowable powdery lyophilized composition as referred to herein is not a lyocake or cake, i.e. it is not a coherent, bulky entity, but emerges in the form of particles that are not coherent as one entity. A flowable powdery lyophilized composition of the present invention can be easily distinguished from lyocakes or cakes of the prior art, e.g. due to its bulk density.

Bulk density is a property of powders, granules, and other "divided" solids. It is the mass of the particles of the material divided by the total volume these particles occupy, usually expressed as g/ml or kg/l. In the context of the present invention bulk density can, for example, be determined as follows: samples are filled into a stainless steel cylinder, weighed and tapped in a Stampf-volumeter, The results of bulk density are then identified as loose (tapped zero times), tapped (tapped 100 times) or tapped to the extreme (tapped 1250 times). Preferably, however, the bulk density is determined in accordance with DIN ISO 697 and EN ISO 60.

In contrast to lyocakes of the prior art, the bulk density of a flowable powdery lyophilized composition of the present invention is lesser than the bulk density of a lyocake, since the powder has an increased volume due to its particulate structure, while a lyocake is one entity.

"Flowable powdery lyophilized composition" describes a lyophilisate that does not emerge during drying as a cake, but as a loose heap of single particles, such as powders or granules. "Powdery lyophilized composition" does not refer to damaged, collapsed or disintegrated lyophilization cakes. Compositions of the present invention are preferably mainly powdery. Partially powdery cakes, powdery byproducts of cakes and powdery residues of cakes are not compositions in the sense of the present invention.

"Lyophilized composition" and "lyophilisate" and are to be understood as equivalent.

The terms "lyophilisate" and "lyophilized composition" refer to the solid remaining after the lyophilization process. As used herein "lyophilisate" and "lyophilized composition" describe the product of a lyophilization.

The terms "flowable lyophilized composition", "flowable lyophilisate", "flowable powdery lyophilized composition" and "flowable powdery lyophilisate" are to be understood as equivalent.

"Powdery" describes herein flowable lyophilisates consisting of dispersed solid particles. As used herein "powdery" does not restrict the size or structure of the lyophilisate particles.

A further aspect of the invention is a lyophilized composition obtainable by
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a lyophilized composition.
wherein said lyophilized composition contains residual amounts of said organic solvent. Preferably said lyophilized composition is a flowable powdery lyophilisate.

Another aspect of the invention is a flowable powdery lyophilized composition that contains a residual amount of ethanol, solketal (2,2-Dimethyl-1,3-dioxolan-4-yl)methanol), methanol, 1-propanol, 2-propanol, 1-butanol, 2-butanol, pentanol (all iso forms), DMSO, N-methyl-2-pyrrolidon, acetone, methylethylketone, ethylacetate, isobutylacetate, isopropylacetate, methylacetat, 3-methyl-1-butanol, propylacetate, ethylether, tert-butylmethylether, or a mixture thereof.

"Residual amount" as used herein refers to a concentration of an organic solvent in a lyophilized composition of less than 10% w/w, less than 5% w/w, less than 4% w/w, less than 3% w/w, less than 2% w/w, less than 1% w/w.

Lyophilized products obtainable by any of the method of the invention include, but are not limited to pharmaceutical compositions, nutraceutical compositions, intermediates in the production of pharmaceuticals or nutraceutical, food, feed, additives to food or feed. Lyophilized products obtainable with any of the method of the invention further include, compounds not for human or animal use like e.g. intermediates of chemical synthesis or ceramics.

The method of the present invention allows the manufacturing of flowable lyophilisates without the need of disintegrating a 'cake'. Thus, the method of the present invention is particularly suitable for the lyophilization of bulk compositions. However, the present invention is not restricted to bulk lyophilization. The method of the present invention is also suitable for lyophilizing compositions directly within the storage and/or final packaging container. Such containers can be single dose containers or multiple dose containers.

Compositions which are subjected to the method of the present invention comprise a binary mixture of water and an organic solvent. Said binary mixture has preferably a eutectic temperature below - 30°C. The meaning of "eutectic temperature" is described in the following:
Mixtures of substances, for which there is a single mixture ratio at which the composition solidifies at a lower temperature than any other composition of the same components are referred to as eutectic systems. The composition having said specified mixture ratio is known as the eutectic composition and the temperature at which it solidifies is known as the eutectic temperature. On a phase diagram the intersection of the eutectic temperature and the mixture ratio of the eutectic composition gives the eutectic point.

If a binary eutectic composition of two liquids (for example water and an organic solvent) is cooled below the eutectic temperature both components solidify. If the mixture of these two components is cooled, first just one component crystallizes while the other remains liquid. Once the eutectic temperature is reached both components crystallize.

As used herein "eutectic temperature" refers to the temperature at which (and below which) the binary mixture of water and an organic solvent is completely frozen. However, if the composition which is subjected to the method of the present invention contains other ingredients besides the organic solvent, "eutectic temperature" also refers to the temperature at which (and below which) the whole composition is completely frozen.

The glass transition is the reversible transition in amorphous materials (or in amorphous regions within semicrystalline materials) from a brittle into a molten or rubber-like state (and reverse).The "glass transition temperature" is the temperature at which an amorphous solid becomes soft upon heating or an amorphous liquid (e.g., a supercooled liquid) becomes brittle upon cooling.

In the context of this invention, the descriptions of temperatures refer to shelf temperatures. "Shelf temperature" refers to the temperature at which the freeze-dryer is set. It does not necessarily correspond with the temperature of the composition.

"Freezing": Within the present invention the freezing step aims to bring the water within the composition from a liquid state to a solid state, while leaving the organic solvent unfrozen. During the freezing step nucleation and formation of ice crystals occurs at a certain temperature throughout the composition. During freezing the shelf and the composition temperature have to be below the freezing temperature of water but above the eutectic temperature of the composition.

"Primary drying": the primary drying step aims to remove the unfrozen organic solvent by vaporization and to remove the frozen solvent (ice crystals) by sublimation.

"Secondary drying": Secondary drying aims the removal of adsorbed solvent (e.g. water) which did not transform to the solid phase (ice) during the freezing step, and hence does not sublimate.

"Vaporization"is the transition from the liquid state to a gas phase. Within the present invention, vaporization primarily occurs in the primary drying step.

"Sublimation" is the transition from the solid state to a gas phase with no intermediate liquid phase. Within the present invention, sublimation primarily occurs during primary drying. To initiate sublimation of ice or solvent crystals the pressure of the freeze dryer is reduced, and heat is applied.

"Desorption": refers herein to the removal of excess moisture (e.g. adsorbed water/solvent) by increasing the shelf-temperature preferably under reduced pressure. Within the present invention, desorption primarily occurs in the secondary drying step.

The term "cake" describes the porous and spongy material resulting from traditional lyophilization processes.

"Tonicifying agent": in some embodiments, an isotonic formulation might be required. The need for such a formulation may be dictated by either the stability requirements of the composition to be lyophilized or those for the route of administration. Tonicifying agents include, sucrose, trehalose, glycine, mannitol and sodium chloride. Tonicity modifiers also can be included in the composition to be lyophilized or in the diluent that reconstitutes the lyophilized product.

"Cake collapse" refers herein to the point at which the lyophilization product softens to the extent that it can no longer support its own structure.

It must be noted that as used herein and in the appended claims, the singular forms "a", "an", and "the", include plural referents unless the context clearly indicates otherwise. Thus, for example, reference to "a reagent" includes one or more of such different reagents, and reference to "the method" includes reference to equivalent steps and methods known to those of ordinary skill in the art that could be modified or substituted for the methods described herein.

Unless otherwise indicated, the term "at least" preceding a series of elements is to be understood to refer to every element in the series. Those skilled in the art will recognize, or be able to ascertain using no more than routine experimentation, many equivalents to the specific embodiments of the invention described herein. Such equivalents are intended to be encompassed by the present invention.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. When used herein the term "comprising" can be substituted with the term "containing" or sometimes when used herein with the term "having".

As described herein, "preferred embodiment" or "preferred aspect" means "preferred embodiment of the present invention" or "preferred aspect of the present invention". Likewise, as described herein, "an embodiments", "another embodiment", "an aspect", "another aspect" means "an embodiments of the present invention", "another embodiment of the present invention", "an aspect of the present invention" and "another aspect of the present invention", respectively.

Several documents are cited throughout the text of this specification. Each of the documents cited herein (including all patents, patent applications, scientific publications, manufacturer's specifications, instructions, etc.), whether supra or infra, are hereby incorporated by reference in their entirety. Nothing herein is to be construed as an admission that the invention is not entitled to antedate such disclosure by virtue of prior invention.

### EXAMPLES

### Example 1: Preparation of a flowable powdery lyophilized composition A set of specimens with differing compositions was tested (see table 1)

**Table 1**

| | Mannitol | Trehalose |
|---|---|---|
| Ethanol | 1 | |
| 2-Propanol | 3 | 10 |

The composition was composed as follows (see table 2):

**Table 2**

| **Formula per vial** | **MW [g/mol]** | **Weighed portion (desired value) [g]** |
|---|---|---|
| **Sugar** | | 0,250 |
| Trehalose Dihydrat | 378,3 | 0,276 |
| Mannitol | | 0,250 |
| **Solvent** | | 0,500 |
| **WFI ad** | | 5,000 |
| | | |

| **Total Formula:** | | **Weighed portion (desired value) [g]** |
|---|---|---|
| Number of vials | 4 | |
| **Sugar** | | |
| Trehalose Dihydrat | | 1,11 |
| Mannitol | | 1,00 |
| **Solvent** | | 2,00 |
| **WFI ad** | | 20,0 |

Subsequently, the compositions were subjected to the following protocol:

**Table 3**

| **Step** | | **Shelf temperature** | **Ice condenser temperature** | **Pressure** | **Time step** | **Cumulative time** |
|---|---|---|---|---|---|---|
| # | Description | [°C] | [°C] | [mbar] | [h:min] | [h:min] |
| 1 | Loading | 20 | - | 1000 | 00:01 | 00:01 |
| 2 | Freezing | -15 | - | 1000 | 00:20 | 00:21 |
| 3 | Annealing | -15 | - | 1000 | 04:30 | 04:51 |
| 4 | Freezing | -50 | - | 1000 | 00:40 | 05:31 |
| 5 | Freezing | -50 | - | 1000 | 04:45 | 10:16 |
| 6 | Vacuum adjustment | -50 | -80 | 0,07 | 00:15 | 10:31 |
| 7 | Primary drying | 35 | -80 | 0,07 | 28:20 | 38:51 |
| 8 | Primary drying/ second. drying | 35 | -80 | 0,07 | 30:00 | 68:51 |

A flowable powder was obtained, as depicted in Fig. 1

## Claims

1. A method for the preparation of a flowable powdery lyophilized composition, comprising
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a flowable powdery lyophilized composition.

2. The method of claim 1, wherein in (a) the composition has a glass transition temperature which is above the temperature chosen for freezing.

3. The method of claim 1 or 2, wherein the flowable powdery lyophilized composition is obtained without the need of a distinct mechanical disintegration step after drying.

4. The method of any one of the preceding claims, wherein said organic solvent is miscible with water such that essentially no phase separation occurs.

5. The method of any one of the preceding claims, wherein said binary mixture does not fully freeze at a temperature of -40°C under normal pressure, whereby a binary mixture of 10% v/v tert-butylalcohol and 90% water v/v serves as reference that fully freezes at said temperature and normal pressure.

6. The method of any one of the preceding claims, wherein said organic solvent is present in the binary mixture at 5-15% v/v, preferably at about 10% v/v.

7. The method of any one of the preceding claims, wherein said organic solvent is ethanol, solketal (2,2-Dimethyl-1,3-dioxolan-4-yl)methanol), methanol, 1-propanol, 2-propanol, 1-butanol, 2-butanol, pentanol (all iso forms), DMSO, N-methyl-2-pyrrolidon, acetone, methylethylketone, ethylacetate, isobutylacetate, isopropylacetate, methylacetat, 3-methyl-1-butanol, propylacetate, ethylether, tert-butylmethylether or a mixture thereof.

8. The method of any one of the preceding claims, wherein said bulking agent is trehalose, sucrose, lactose, raffinose, mannitol, glycine, biogenic amino acids (e.g. alanine, arginine), sodium chloride, dextran, hydroxyethyl starch, or PVP.

9. The method of claim 7 or 8, wherein
i. the organic solvent is ethanol and the bulking agent is mannitol,
ii. the organic solvent is solketal and the bulking agent is mannitol,
iii. the organic solvent is 2-propanol and the bulking agent is trehalose,

10. The method of any one of the preceding claims, wherein said primary drying occurs at a temperature above the temperature chosen for the freezing and at reduced pressure.

11. The method of any one of the preceding claims, wherein the glass transition temperature of said composition is determined by differential scanning calorimetry (DSC), differential thermal analysis, electrical resistance or freeze drying/cryomicroscopy.

12. The method of any one of the preceding claims, wherein the method is carried out in a tray.

13. The method any one of the preceding claims, wherein the composition comprises at least one further pharmaceutical excipient.

14. Use of a method of any one of claims 1 to 13 for the preparation of a flowable powdery lyophilized composition, comprising
(a) subjecting a composition comprising at least one compound of interest and a bulking agent in a binary mixture of water and an organic solvent to freezing, wherein said binary mixture has a eutectic temperature below the temperature chosen for the freezing such that said composition only partially freezes at said temperature; and
(b) primary drying said partially frozen composition to remove the liquid phase by vaporization and to remove the solid solvent phase by sublimation; and
(c) secondary drying to remove residual water and solvent; and
(d) directly obtaining a flowable powdery lyophilized composition.

15. A flowable powdery lyophilized composition obtainable by the method of any one of the preceding claims, said composition preferably contains a residual amount of an organic solvent, preferably an organic solvent as defined in claim 7
